Europäisches Patentamt

European Patent Office

Office européen des brevets

(19)

(11) Veröffentlichungsnummer: **0 068 096**
**B1**

(12) **EUROPÄISCHE PATENTSCHRIFT**

(45) Veröffentlichungstag der Patentschrift:
20.03.85

(21) Anmeldenummer: 82103540.9

(22) Anmeldetag: 27.04.82

(51) Int. Cl.⁴: **F 16 D 65/22**

(54) **Bremsseilzugbefestigung.**

(30) Priorität: 27.06.81 DE 3125443

(43) Veröffentlichungstag der Anmeldung:
05.01.83 Patentblatt 83/1

(45) Bekanntmachung des Hinweises auf die Patenterteilung:
20.03.85 Patentblatt 85/12

(84) Benannte Vertragsstaaten:
AT DE FR GB IT

(56) Entgegenhaltungen:
DE - B - 2 410 026
DE - C - 706 394
DE - U - 6 918 160
FR - A - 2 147 673
FR - E - 55 621
US - A - 3 139 768
US - A - 3 415 549
US - A - 3 627 360
US - A - 4 131 379

(73) Patentinhaber: Bergische Achsenfabrik Fr. Kotz &
Söhne, Am Ohlerhammer, D-5276 Wiehl 1 (DE)

(72) Erfinder: Ebbinghaus, Wilfried, Perkerstrasse 42,
D-5276 Wiehl (DE)
Erfinder: Henze, Erwin, Freiherr-vom-Stein-Strasse 28,
D-5276 Wiehl (DE)

(74) Vertreter: Stenger, Alex, Dipl.-Ing. et al, Patentanwälte
Dipl.-Ing. A. Stenger Dipl.-Ing. W. Watzke Dipl.-Ing. H.J.
Ring Kaiser-Friedrich-Ring 70,
D-4000 Düsseldorf 11 (DE)

ACTORUM AG

## Beschreibung

Gegenstand der Erfindung ist eine Vorrichtung zum löslichen Verbinden eines Bremsseilzuges mit einer Spreizhebelbremse, bestehend aus einem mit einem Zugbügel kuppelbaren Zugseil und einer mit einem Bremsschild lösbar verbundenen Glocke, die ausserhalb des Bremsschildes angeordnet und an letzterem abgestützt ist, weiterhin mit einem das Zugseil umgebenden Hüllrohr, dessen eine Mittelbohrung der Glocke durchgreifendes Endstück über einen Endflansch und einen Gewindeschaft mit Kontermuttern mit der Glocke lösbar verbunden ist, wobei die Kupplung zwischen Zugseil und Zugbügel ausserhalb des Bremsschildes und innerhalb der Glocke angeordnet ist.

Bei den bekannten Spreizhebelbremsen wird die Zugspannung der Bremsbacken gegen die Wirkung einer Rückhohlfeder durch Ausüben einer Zugspannung auf das Ende eines Hebels im Spreizhebelsystem bewirkt. Die Übertragung der Zugspannung vom Bremshebel auf das Ende des Hebels im Spreizhebelsystem erfolgt über einen Seilzug. Während die ausserhalb der Bremstrommel liegende Verbindung des Seilzuges mit dem Bremshebel keinerlei Schwierigkeiten bereitet, ist die Montage des Seilzuges an der Spreizhebelbremse mit erheblichen Schwierigkeiten verbunden. In dem gattungsbildenden DE-U-6 918 160 wird eine Vorrichtung vorgeschlagen, mit der ein Hüllrohr des Zugseiles an einer Glocke und die Glocke mit einem Gewinde lösbar im Bremsschild befestigt werden. Abgesehen davon, dass die Herstellung der Gewinde im Bremsschild auf der Glocke einen erhöhten Aufwand erfordern, ist die bekannte Bremsseilzugbefestigung nicht ausreichend betriebssicher, weil die Glocke sich durch im Fahrbetrieb auftretende Schwingungen im Bremsschild verstellen kann.

Ferner ist aus der US-A-3 627 360 schon eine Vorrichtung zum lösbaren Verbinden eines Bremsseilzuges mit einer Brems bekannt, bestehend aus einem mit einem Betätigungsseil kuppelbaren Zugseil und einer mit einem Bremsschild verbindbaren Glocke, mit einer in der Glocke angeordneten, U-förmig gebogenen Federklammer, welche den Bremsschild mit abgewinkelten Haken hintergreift und gleichzeitig die auf dem Bremsschild abgestützte Glocke mit umgebogenen Krallen übergreift.

Davon ausgehend liegt der Erfindung die Aufgabe zugrunde, eine einfach konstruierte Bremsseilzugbefestigung zu schaffen, deren Verbindungsglied am Bremsschild mit wenigen Handgriffen montierbar und demontierbar ist und sich nach der Montage nicht unbeabsichtigt lösen oder verstellen kann.

Zur Lösung dieser Aufgabe wird vorgeschlagen, dass innerhalb der Glocke eine U-förmig gebogene Federklammer, welche eine Öffnung im Bremsschild mit abgewinkelten Haken hintergreift und gleichzeitig die auf dem Bremsschild abgestützte Glocke mit umgebogenen Krallen übergreift, über eine Mittelbohrung auf dem Endstück zwischen Endflansch und Glocke eingespannt ist.

In weiterer Ausgestaltung der Erfindung hat es sich als zweckmässig erwiesen, die Krallen etwa in der Mitte der Haken an der Federklammer anzuordnen und die Öffnung des Bremsschildes im Bereich der beiden Krallen mit Aussparungen zu versehen.

Ausser dem Vorteil einer einfachen Montage hat eine erfindungsgemäss ausgebildete Bremsseilzugbefestigung auch noch den weiteren Vorteil, dass der Festpunkt für den Seilzug an der Glocke sich nach der Montage nicht mehr im Verhältnis zum Bremsschild unbeabsichtigt verschieben kann.

Weitere Einzelheiten und Vorteile des Gegenstandes der Erfindung ergeben sich aus der nachfolgenden Beschreibung der zugehörigen Zeichnungen, in denen eine bevorzugte Ausführungsform der erfindungsgemäss ausgebildeten Bremsseilzugbefestigung dargestellt ist. In den Zeichnungen zeigen:

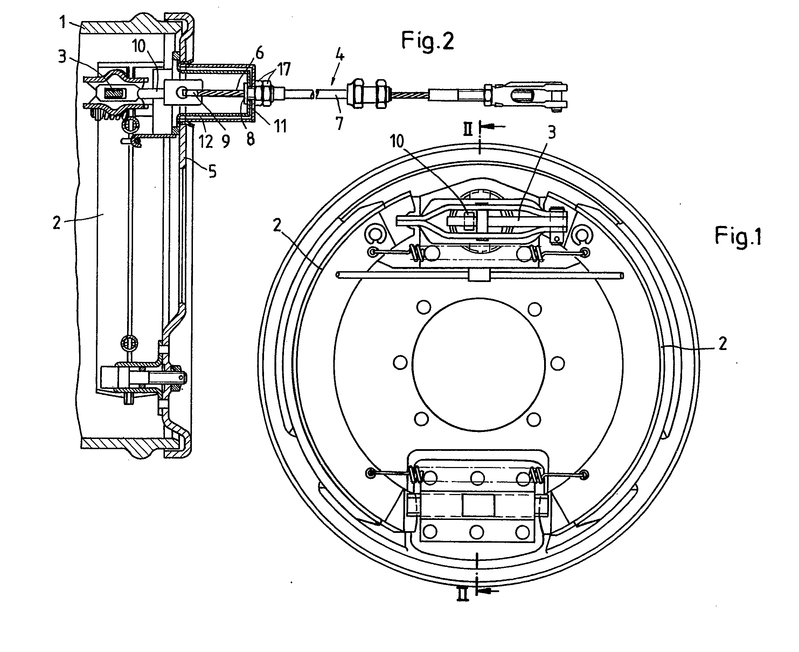

Fig. 1 eine Spreizhebelbremse von der Innenseite her gesehen;

Fig. 2 dieselbe Spreizhebelbremse entlang der Linie II-II in Fig. 1, geschnitten in Seitenansicht;

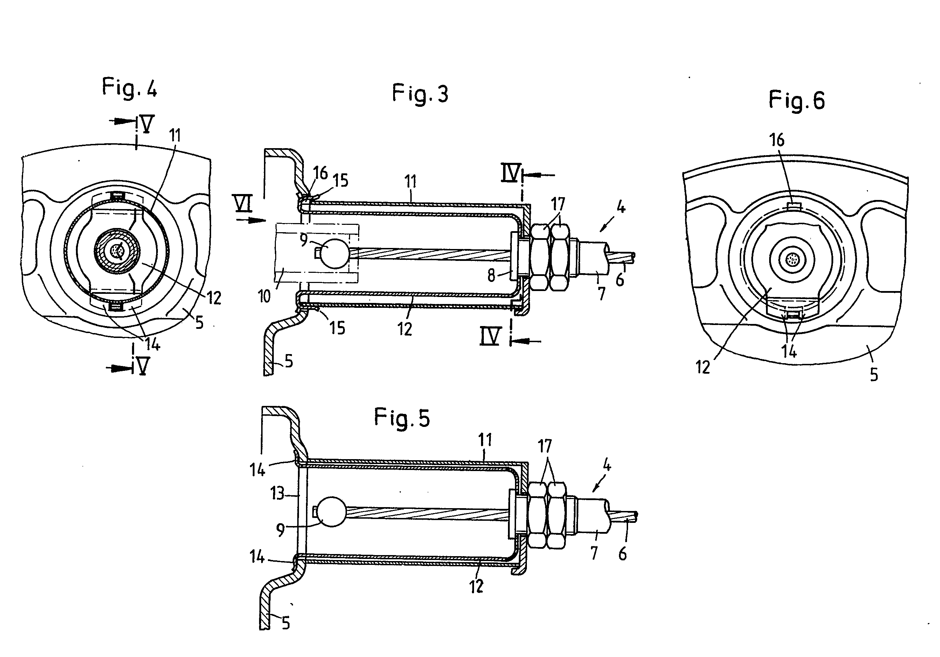

Fig. 3 einen Ausschnitt aus Fig. 2 zur Veranschaulichung des Zusammenwirkens der Federklammer, der Glocke und des Bremsschildes bei der Befestigung im Querschnitt;

Fig. 4 die Bremsseilzugbefestigung entlang der Linie IV-IV in Fig. 3 geschnitten;

Fig. 5 dieselbe Bremsseilzugbefestigung entlang der Linie V-V in Fig. 4 geschnitten;

Fig. 6 dieselbe Bremsseilzugbefestigung in Richtung des Pfeiles VI gesehen.

Die dargestellte Spreizhebelbremse besteht im Prinzip aus einer Bremstrommel 1, zwei Bremsbakken 2, einem Spreizhebel 3, einem Bremsseilzug 4 und einem Bremsschild 5, der auf einem — nicht dargestellten — Achskörper starr befestigt ist.

Der Bremsseilzug 4 besteht aus einem Zugseil 6 und einem Hüllrohr 7 mit einem Endstück 8. Am inneren Ende des Zugseiles 6 ist eine Kugel 9 befestigt, die in ein Verbindungsglied 10 zum Spreizhebel 3 eingehängt ist. Die Verbindung zwischen dem Zugseil 6 und dem Verbindungsglied 10 ist mit einer zylindrischen Glocke 11 abgedeckt, die sich auf dem Bremsschild 5 abstützt.

In der Glocke 11 ist eine U-förmig gebogene Federklammer 12 angeordnet, welche den Rand einer Öffnung 13 im Bremsschild 5 mit abgewinkelten Haken 14 hintergreift. In der Mitte jedes Hakens 14 befindet sich eine nach aussen umgebogene Kralle 15, welche in einer Ausnehmung 16 der Öffnung 13 liegt und die Glocke 11 übergreift.

In den inneren Enden der Glocke 11 und der Federklammer 12 sind Bohrungen vorgesehen, mit denen beide Teile auf dem Endstück 8 des Hüllrohres 7 angeordnet sind. Mit Kontermuttern 17 können die Glocke 11 und die Federklammer 12 auf dem Endstück 8 verschraubt und damit gegen den Bremsschild 5 verspannt werden.

Zur Demontage des Bremsseilzuges 4 werden die Kontermuttern 17 gelöst, damit die Glocke 11 von der Federklammer 12 abgezogen werden kann. Danach ist es ohne weiteres möglich, die beiden Schenkel der Federklammer 12 zusammenzudrücken und damit die Haken 14 in die Öffnung 13 des Bremsschildes 5 hineinzubewegen. Danach kann dann auch die Kugel 9 aus dem Verbindungsglied 10 ausgehängt werden. Die Montage des Bremsseilzuges 4 erfolgt in umgekehrter Reihenfolge. Das Öffnen der Bremstrommel 1 ist nicht erforderlich, weil die Kupplung zwischen dem Zugseil 6 und dem Verbindungsglied 10 im Bereich der Glocke 11 liegt und deshalb von aussen her zugänglich ist.

**Patentansprüche**

1. Vorrichtung zum lösbaren Verbinden eines Bremsseilzuges (6, 7) mit einer Spreizhebelbremse (1-5), bestehend aus einem mit einem Zugbügel (10) kuppelbaren Zugseil (6) und einer mit einem Bremsschild (5) lösbar verbundenen Glocke (11), die ausserhalb des Bremsschildes angeordnet und an letzterem abgestützt ist, weiterhin mit einem das Zugseil umgebenden Hüllrohr (7), dessen eine Mittelbohrung der Glocke durchgreifendes Endstück (8) über einen Endflansch und einen Gewindeschaft mit Kontermuttern (17) mit der Glocke lösbar verbunden ist, wobei die Kupplung zwischen Zugseil und Zugbügel ausserhalb des Bremsschildes und innerhalb der Glocke angeordnet ist, dadurch gekennzeichnet, dass innerhalb der Glocke (11) eine U-förmig gebogene Federklammer (12), welche eine Öffnung im Bremsschild (5) mit abgewinkelten Haken (14) hintergreift und gleichzeitig die auf dem Bremsschild abgestützte Glocke mit umgebogenen Krallen (15) übergreift, über eine Mittelbohrung auf dem Endstück (8) zwischen Endflansch und Glocke eingespannt ist.

2. Vorrichtung nach Anspruch 1, dadurch gekennzeichnet, dass die Krallen (15) in der Mitte der Haken (14) angeordnet sind.

3. Vorrichtung nach den Ansprüchen 1 und 2, dadurch gekennzeichnet, dass der Bremsschild (5) mit Aussparungen (16) für die Krallen (15) versehen ist.

**Claims**

1. Device for the separable connection of a brake cable assembly (6, 7) to an expanding lever brake (1-5), consisting of a control cable (6) which can be coupled to a tow bracket (10), and a bell-type housing (11) which can be separably connected to a brake plate (5), and which is disposed outside of and supported on the brake plate, and furthermore having, enclosing the control cable, a casing tube (7), comprising an end piece (8) which passes through a central bore in the bell-type housing to be separably connected to the bell-type housing through an end flange and a threaded shank with lock nuts (17), the coupling between control cable and tow bracket being disposed outside the brake plate and inside the bell-type housing, characterised in that there is inside the bell-type housing (11), bent to a U-shape, a spring clip (12) which has angled-over hooks (14) engaging behind an aperture in the brake plate (5), while at the same time bent-over claws (15) engage over the bell-type housing which is braced on the brake plate, the spring clip being fitted through a central bore and clamped on the end piece (8) between end flange and bell-type housing.

2. A device according to claim 1, characterised in that the claws (15) are disposed in the middle of the hooks (14).

3. A device according to claims 1 and 2, characterised in that the brake plate (5) is provided with cutouts (16) for the claws (15).

**Revendications**

1. Dispositif pour l'assemblage amovible d'un tirant à câble de frein (6, 7) avec un frein à levier d'écartement (1 à 5), constitué d'un câble de traction (6) pouvant être relié à un étrier de traction (10) et d'une cloche (11) assemblée de façon amovible avec un plateau de frein (5), cloche qui est disposée à l'extérieur du plateau de frein et qui s'appuie sur ce dernier, avec en outre un tube de gainage (7) entourant le câble de traction, tube dont la pièce d'extrémité (8) traversant un perçage central de la cloche est assemblée de façon amovible avec la cloche au moyen d'une bride d'extrémité et d'un fût fileté avec des contre-écrous (17), l'assemblage entre le câble de traction et l'étrier de traction étant disposé à l'extérieur du plateau de frein et à l'intérieur de la cloche, caractérisé en ce qu'à l'intérieur de la cloche (11) une agrafe élastique (12) cintrée en forme de U qui s'accroche par des crochets repliés (14) derrière une ouverture du plateau de frein (5) et s'engage en même temps par des griffes recourbées (15) sur la cloche s'appuyant sur le plateau de frein, est encastrée au moyen d'un perçage central sur la pièce d'extrémité (8) entre la bride d'extrémité et la cloche.

2. Dispositif selon la revendication 1, caractérisé en ce que les griffes (15) sont disposées au milieu des crochets (14).

3. Dispositif selon les revendications 1 et 2, caractérisé en ce que le plateau de frein (5) est muni d'évidements (16) pour les griffes (15).

Fig.1

Fig.2

Fig.6

Fig.3

Fig.4

Fig.5